# EUROPÄISCHE PATENTSCHRIFT

(11) **EP 0 773 842 B1**
(45) Veröffentlichungstag und Bekanntmachung des Hinweises auf die Patenterteilung: **27.01.1999**
(21) Anmeldenummer: 95927707.0
(22) Anmeldetag: 22.07.1995
(51) Int. Cl.: B09B 3/00

(54) **VERFAHREN ZUM AUFBEREITEN VON EMBALLAGEN**
METHOD OF PROCESSING PACKAGING
PROCEDE DE TRAITEMENT D'EMBALLAGES

(30) Priorität: 28.07.1994 WO PCT/EP94/02483
(43) Veröffentlichungstag der Anmeldung: 21.05.1997
(73) Patentinhaber: RATHOR AG, 9050 Appenzell (CH)
(72) Erfinder: PAULS, Mathias, CH-9050 Appenzell (CH)
(74) Vertreter: Thiel, Christian, Dr. Dipl.-Chem.
(86) Internationale Anmeldenummer: EP9502907
(87) Internationale Veröffentlichungsnummer: WO9603231

(56) Entgegenhaltungen:
- EP-A- 0 455 115
- WO-A-93/22077
- NL-A- 9 001 596

## Beschreibung

Die Erfindung betrifft ein Verfahren zum Aufbereiten von Emballagen, die reaktionsfähige Rückstände enthalten, insbesondere von Kartuschen zur Erzeugung von Polyurethanschaum. Bei dem Verfahren werden die Emballagenmaterialien gewonnen und darin enthaltene Rückstände zu weiterverwendbaren Produkten umgesetzt. Ein derartiges Verfahren ist aus EP-A-455.115 bekannt.

Rückstandhaltige Emballagen, wie sie beispielsweise in Form von ganz oder teilweise entleerten Kartuschen in großen Mengen anfallen, werden zunehmend zu einem Entsorgungsproblem. Eine Ablagerung auf Deponien verbietet sich aus Gründen des Umweltschutzes, da die darin enthaltenen Rückstände in die Atmosphäre, ins Erdreich oder ins Grundwasser gelangen können und dort zu erheblichen Schäden führen können. Entsprechendes gilt für die Verbrennung, die insbesondere bei chemisch-technischen Produkten häufig nur unvollständig ist und große Mengen Schadstoffe erzeugt, die, wenn überhaupt, nur durch aufwendige Maßnahmen gebunden werden können. Insoweit führt eine Verbrennung zwar zu einer starken Verminderung des Abfallvolumens, nicht aber notwendig zu einer Lösung der umweltbeeinträchtigung.

Besondere Probleme entstehen dann, wenn die in den Emballagen enthaltenen Rückstände selbst reaktionsfähige und unter Umständen auch toxische Produkte darstellen, wie dies beispielsweise bei isocyanathaltigen Prepolymeren für Polyurethanschäume der Fall ist. Ensprechendes gilt auch für andere reaktive Kunststoffprodukte, beispielsweise selbsthärtende oder härtbare Abmischungen für Beschichtungen, Klebstoffabmischungen, etc. Im folgenden wird auf das Problem anhand der Entsorgung von prepolymerhaltigen Kartuschen für die Erzeugung von Polyurethanschäumen näher eingegangen, wobei dieser Fall nur als Beispiel gegeben wird.

Polyurethanschäume haben auf vielen Gebieten weit verbreitete Anwendung gefunden. Insbesondere im Bauwesen werden sie vielfach zum Abdichten und Isolieren eingesetzt, ebenso auf anderen technischen Gebieten. Vielfach werden Polyurethanschäume aus Kartuschen ausgebracht, die ein Polyurethanprepolymer zusammen mit benötigten Additiven enthalten. Diese Kartuschen können nach Gebrauch nicht erneut verwandt werden. Andererseits stellen sie Problemabfall dar, der einer normalen Entsorgung nicht zugänglich ist.

Im Rahmen der Bemühungen zur Eindämmung des Haus-und Gewerbeabfalls werden zunehmend Maßnahmen diskutiert und verordnet, die die Hersteller zwingen, die Verpackung ihrer Produkte nach Gebrauch zurückzunehmen und selbst für die Wiederverwendung bzw. Beseitigung zu sorgen. Durch solche Maßnahmen ist es erforderlich geworden, nach Wegen für eine wirtschaftliche Behandlung solchen Abfalls zu suchen. Bei der Behandlung von zurückgenommenen Kartuschen für die Polyurethanschaumherstellung ergeben sich eine Reihe von Problemen, die die wirtschaftliche Wiederaufbereitung erschweren. Beispielsweise kann ein Teil der zurückgenommenen Kartuschen wegen eingedrungener Feuchtigkeit bei unsachgemäßer Lagerung oder Behandlung unter Druck stehen, der sowohl die Öffnung als auch die Verbrennung zu einem Problem macht. Weiterhin weisen die Kartuschen einen unterschiedlichen Füllungszustand auf, der von überalterten Kartuschen mit praktisch vollständiger Prepolymerfüllung, die aufgrund eines blockierten Ventils nicht mehr ausgebracht werden kann, bis hin zu praktisch vollständig entleerten Kartuschen mit nur noch an den Randungen anhaftendem Rest von Prepolymer in unvernetztem bis vernetztem Zustand reicht.

Bislang sind eine Reihe von Verfahren zur Aufbereitung von Emballagen, darunter auch Aerosoldosen für die Polyurethanschaumerzeugung, bekannt geworden. So wurde beispielsweise vorgeschlagen, Druckdosen über ein Schleusensystem in eine unter in Intergas stehende Anlage einzuschleusen und dort zu zerkleinern. Ferner sind Verfahren bekannt geworden, Aerosoldosen in eine Anlage einzuschleusen, dort zu zerkleinern und die Inhaltsstoffe mit geeigneten Lösungsmitteln zu extrahieren. Bei diesen Verfahren werden sowohl die Emballagenmaterialien als auch die Inhaltsstoffe (Prepolymer, Treibgas) gewonnen.

Diese bekannten Verfahren, die teilweise recht leistungsfähig sind und praktiziert werden, sind aber hinsichtlich Arbeitssicherheit, Verfahrensführung und Effizienz verbesserungsfähig. Es bereitet Probleme, die in den Emballagen enthaltenen Rückstände auf einfache Art und Weise zu separieren und einer geeigneten Weiterverwendung zuzuführen. Weitere Probleme ergeben sich daraus, daß die Emballagen toxikologisch nicht unbedenkliche Stoffe enthalten wie auch brennbare Lösungsmittel, die nach dem Öffnen explosionsfähige Gasgemische ergeben können. Insbesondere sind diese Verfahren aber auf die Aufbereitung treibgashaltiger Aerosoldosen ausgebildet und daher für drucklose Kartuschen nur beschränkt einsatzfähig.

Der Erfindung liegt daher die Aufgabe zugrunde, ein Verfahren bereitzustellen, mit dem Emballagen, beispielsweise Behälter, die Polyurethanprepolymer insbesondere für die Schaumherstellung, aber auch für Klebezwecke, zusammen mit Lösungsmitteln enthalten, aufbereitet, und die darin enthaltenen Wertstoffe gewonnen werden können, ohne daß gesundheits- und umweltschädliche Inhaltsstoffe unkontrolliert freigesetzt werden und ohne daß der Verfahrensablauf durch aus den Emballagen freigesetzte reaktionsfähige Komponenten belastet wird. Das Verfahren soll den Anforderungen an die Arbeitssicherheit gerecht werden und insbesondere in den Emballagen noch enthaltene reaktionsfähige Rückstände in eine für die direkte Weiterverarbeitung geeignete Form überführen.

Erfindungsgemäß wird diese Aufgabe mit einem Verfahren der eingangs genannten Art erreicht, bei dem die Emballagen in eine Kältezone eingebracht und soweit abgekühlt werden, daß sich darin befindliche Rückstände verfestigen, die Emballagen anschließend in gekühltem Zustand zerkleinert werden, wonach die zerkleinerten Emballagen in eine die reaktionsfähigen Rückstände enthaltende Fraktion und wenigstens eine weitere Fraktion aufgetrennt werden, die Rückstände enthaltende Fraktion in eine Mischzone eingebracht wird, in die gleichzeitig ein mit den Rückständen reaktionsfähiges Agens eingeführt wird, gegebenenfalls zusammen mit einem Katalysator, wobei die Temperatur in der Mischzone unterhalb der Erweichungstemperatur der Rückstände wie des reaktionsfähigen Agens gehalten wird, und die so erhaltene Mischung aus Rückstände enthaltender Fraktion und reaktionsfähigem Agens und gegebenenfalls Katalysator in einer Reaktionszone auf eine zur Reaktion ausreichende Temperatur gebracht und ausreagieren gelassen wird.

Mit dem erfindungsgemäßen Verfahren ist es möglich, Emballagen auf eine völlig ungefährliche Art und Weise zu öffnen und weiterzuverarbeiten. Insbesondere wird erreicht, daß die in den Emballagen enthaltenen verschiedenen Materialien auf gefahrlose Art und Weise getrennt werden können. Die reaktionsfähigen Rückstände, beispielsweise bei Kartuschen zur Erzeugung von Polyurethanschaum isocyanathaltige Prepolymere, werden auf eine sicherheitstechnisch unbedenkliche Art und Weise behandelt. Durch das Einfrieren der in den Emballagen enthaltenen Inhaltsstoffe kommt es weder zu einer reaktionsbedingten Druckerhöhung im Verfahren noch zu unerwünschten Reaktionen zwischen reaktionsfähigen Komponenten. Bei den im Verfahren herrschenden Temperaturen ist auch die Gegenwart von Wasser unschädlich. Die beiden letztgenannten Punkte sind bei der Behandlung isocyanathaltiger Produkte von Bedeutung, wenn beispielsweise durch beschädigte Emballagen Wasser in das Verfahren getragen wird. Gleichzeitig können in sogenannten 2K-Schäumen enthaltene reaktionsfähige zweite Komponenten, beispielsweise Glykole, Carbonsäuren oder Wasser, problemlos in das Verfahren eingebracht werden. Insoweit ist das erfindungsgemäße Verfahren geeignet, gleichzeitig sowohl Kartuschen für 1K- als auch für 2K-Schäume wie auch Übergangsformen zwischen beiden zu behandeln.

Im erfindungsgemäßen Verfahren werden die Emballagen, beispielsweise Kartuschen, zunächst in eine Kältezone eingeführt und darin soweit abgekühlt, daß sich die darin befindlichen Rückstände einschließlich darin befindlicher niedrig siedender Lösungsmittel verfestigen. Im allgemeinen sind hierfür Temperaturen von weniger als -80°C bis -100°C ausreichend; zweckmäßigerweise wird aber in flüssigem Stickstoff als Kältemedium gearbeitet. In diesem Fall ist es wichtig, daß das Verfahren unter Sauerstoffausschluß durchgeführt wird, um das Einkondensieren von flüssigem Sauerstoff zu vermeiden, der sich in späteren Verfahrensschritten nachteilig auswirken könnte.

Das Einbringen in die Kältezone erfolgt zweckmäßigerweise mit einer Zellrad-Durchblasschleuse, mit der die einzuschleusende Emballage in ein in dem Kältemedium verlaufenden Führungskäfig einführt. In der Kältezone wird die Emballage dann eine hinreichende Strecke durch das Kältemedium geführt, um ein vollständiges Gefrieren zu erreichen.

Nach Erreichen der gewünschten Temperatur, im allgemeinen die Temperatur flüssigen Stickstoffs, werden die Emballagen in die Zerkleinerungszone geführt, wo sie in kaltem Zustand zerkleinert werden. Die Temperaturen sollten hier zweckmäßigerweise unter -80°C bis -100°C liegen; gegebenenfalls muß flüssiger Stickstoff oder kalter gasförmiger Stickstoff eingedüst werden.

Die Zerkleinerung erfolgt zweckmäßigerweise in einem Hammerwerk, das gegen ein Sieb arbeitet. Hierdurch wird ein Rüttel- und Walkeffekt erreicht, der - neben der Zerkleinerung auf eine gewünschte Korngröße - eine Trennung der verschiedenen Materialien herbeiführt: Metall, Papier, Kunststoff und Inhaltsstoffe. Es hat sich überraschend gezeigt, daß sich hierbei die Emballagenmaterialien - Metall, Papier und Kunststoff - außerordentlich gut von den Inhaltsstoffen - reaktionsfähige Rückstände und Lösemittel/Zusatzstoffe in Pulverform - trennen lassen, wobei die Inhaltsstoffe als feines Pulver anfallen.

In einer darauffolgenden Trennstufe werden die zerkleinerten Emballagen in wenigstens zwei Fraktionen aufgetrennt, von denen eine die reaktionsfähigen Rückstände einschließlich des Treibgases in festem Zustand enthält. Zweckmäßigerweise ist in dieser Trennstufe ein Sieb vorgesehen, zweckmäßigerweise ein Rüttelsieb, durch das die Feinbestandteile, überwiegend reaktionsfähige Rückstände und Lösemittel - hindurchfallen. Metallteile werden mit magnetischen Verfahren abgetrennt, größere Kunststoffteile und Papierfetzen auf dem Rüttelsieb abgesiebt.

Die gefrorenen Inhaltsstoffe aus reaktionsfähigen Rückständen und Lösemittel gelangen aus der Trennzone in eine Mischzone, in die gleichzeitig ein mit den Rückständen reaktionsfähiges Agens eingeführt wird. Auch in diese Mischzone herrschen Temperaturen von weniger als -80 °C bis -100°C, um den gefrorenen Zustand der eingebrachten Materialien zu gewährleisten und das eingedüste reaktionsfähige Agens sofort zu einem feinen Pulver zu verfestigen. Hierdurch wird erreicht, daß sich eine gleichmäßige Mischung aus Inhaltsstoffen in Pulverform und reaktionsfähigem Agens herausbildet, die aber aufgrund der herrschenden Temperaturbedingungen nicht reagieren kann. Die Temperaturen in der Mischzone liegen in jedem Fall unterhalb des Schmelzpunktes sowohl der Rückstände wie des reaktionsfähigen Agens.

Zweckmäßigerweise wird als Mischzone ein Sprühturm verwandt, in den die gefrorenen Inhaltsstoffe von oben hineinfallen. In diesen Pulverstrom wird aus seitlichen Düsen das reaktionsfähige Agens eingesprüht, zweckmäßigerweise zusammen mit kaltem gasförmigen Stickstoff, um die erforderlichen tiefen Temperaturen zu gewährleisten. Ein Vorkühlung des reaktionsfähigen Agens ist zweckmäßig, jedoch muß die Sprühfähigkeit gewährleistet bleiben.

Es kann zweckmäßig sein, das reaktionsfähige Agens zusammen mit einem Katalysator einzudüsen, der die Reaktion mit den reaktionsfähigen Rückständen der Emballagen fördert. Im Falle von isocyanathaltigen Prepolymeren ist dies aber im allgemeinen nicht erforderlich, da die isocyanathaltigen Abmischungen bereits solche Katalysatoren enthalten.

Die pulverförmige Mischung aus Inhaltsstoffen und reaktionsfähigem Agens und gegebenenfalls Katalysator wird dann anschließend in eine Reaktionszone geführt, die beispielsweise aus einem sich unter der Mischzone kontinuierlich bewegenden Förderband besteht. Das sich hier sammelnde Pulver wird dann auf eine für die Reaktion ausreichende Temperatur gebracht, um auszureagieren. Enthaltene Lösungsmittel verdampfen bei dieser Gelegenheit und werden an geeigneter Stelle auskondensiert, was bei der Verwendung von Stickstoff als Kältemittel kein Problem darstellt. Um dem Reaktionsprodukt die erwünschte Form zu geben, kann das Förderband seitliche Begrenzungen aufweisen. Zur Abtrennung des Reaktionsproduktes vom Förderband ist es möglich, Trennmittel vorzusehen, beispielsweise geeignete Beschichtungen oder Trennpapier. Die Beheizung in der Reaktionszone erfolgt zweckmäßigerweise mit Mikrowellen, die ein schnelles direktes Aufheizen des Pulvermaterials von innen heraus bewirken, so daß es zu einer gleichmäßigen Entgasung kommt.

Im Anschluß an die Reaktionszone können weitere Verarbeitungs- und Behandlungszonen vorgesehen sein sowie schließlich eine Schleuse zum Ausschleusen des ausreagierten Materials.

Wie bereits erwähnt ist das erfindungsgemäße Verfahren besonders zum Aufbereiten von rückstandshaltigen Polyurethanschaum-Kartuschen geeignet. In diesem Fall ist das reaktionsfähige Agens insbesondere eine hydroxygruppenhaltige Verbindung, beispielsweise Wasser, Ethylenglykol, Propylenglykol, Glycerin, Oligomere und Mischungen davon sowie Derivate derselben. Ethylenglykol, Wasser und Polyetheralkohole sind bevorzugt, wobei in jedem Fall wenigstens zwei reaktive Wasserstoffatome vorhanden sein sollten. Polycarbonsäuren können ebenfalls eingesetzt werden. Unter den Polyetheralkoholen sind die sogenannten Jeffamine (Warenzeichen) besonders geeignet.

Bei der Aufbereitung von Emballagen für die Erzeugung von Polyurethanschäumen bietet es sich an, die isocyanathaltigen Prepolymere im Verfahren selbst zu Schaummaterialien umzusetzen, die beispielsweise für Dämm- und Isolierzwecke eingesetzt werden können. So können mit dem erfindungsgemäßen Verfahren kontinuierlich Dämmplatten hergestellt werden, wobei die in dem in der Mischzone erzeugten Pulver enthaltenen Treibgase die Schaumbildung begünstigen. Es ist aber auch ohne weiteres möglich, Folien zu erzeugen oder aber Zusatzstoffe zuzumischen, beispielsweise zellulosehaltige Materialien, und diese Mischungen dann bei oder nach der Reaktion zu Verbundmaterialien zu verpressen. Bevorzugt ist aber die Erzeugung eines Granulats aus reagiertem Material, das später weiterverarbeitet wird.

Das erfindungsgemäße Verfahren ist besonders zur Aufarbeitung von drucklosen Polyurethanschaum-Kartuschen geeignet, die mit Hilfe einer dafür geeigneten Pistole am Einsatzort entleert werden und danach dem Hersteller zur Aufbereitung zurückgesandt werden. Diese Kartuschen, die sowohl für 1K-wie auch für 2K-Schäume zum Einsatz kommen, sind bei der Lagerung drucklos und enthalten in der Regel kein Treib- oder Schäummittel. Soweit eine Verbesserung des Schäumverhaltens notwendig ist und diese Verbesserung nicht durch Verwendung von Wasser als zweiter Komponente erzielbar ist, können niedrig siedende Lösungsmittel zugegen sein, beispielsweise Pentan, die bei Normaltemperatur flüssig sind, jedoch unter den Reaktionstemperaturen des Prepolymers mit der zweiten Komponente verdampfen und einen Treibeffekt bewirken. Der Einsatz des erfindungsgemäßen Verfahrens für Aerosoldosen zur Polyurethanschaumerzeugung ist ebenfalls möglich, wenn für eine wirksame Treibgasabscheidung im Bereich der Reaktionszone gesorgt wird. Somit ist das Verfahren grundsätzlich für Emballagen geeignet, die auch Treibmittel enthalten und, ggf. in Abhängigkeit von der Temperatur, eine treibende und/oder aufschäumende Wirkung erzielen.

Das erfindungsgemäße Verfahren wird durch die beiliegende Abbildungen näher erläutert. Von diesem zeigt
- Fig. 1: schematisch eine Ausführungsform einer Anlage zur Durchführung des erfindungsgemäßen Verfahrens;
- Fig. 2: den Eingangsbereich der Anlage gemäß Fig. 1;
- Fig. 3: den Förder-, Zerkleinerungs- und Sortierteil der Anlage gemäß Fig. 1;
- Fig. 4: die Misch- und die Reaktionszone der Anlage gemäß Fig. 1;
- Fig. 5: Einzelheiten der Zuführung der Zellradschleuse;
- Fig. 6: Einzelheiten der Führung des Transportsystems in der Draufsicht und
- Fig. 7: die Führung von Fig. 6 im Querschnitt.

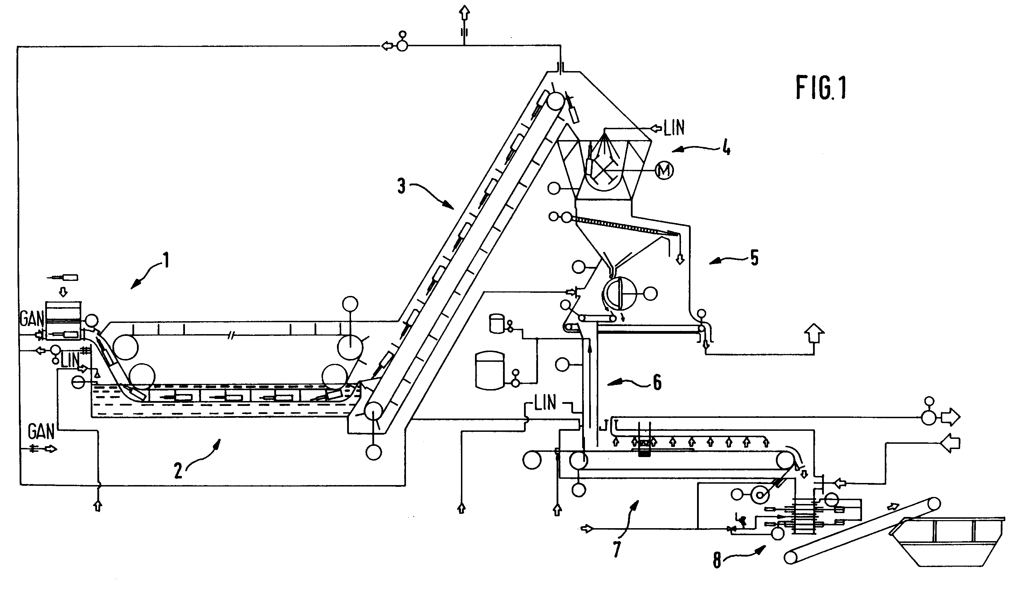

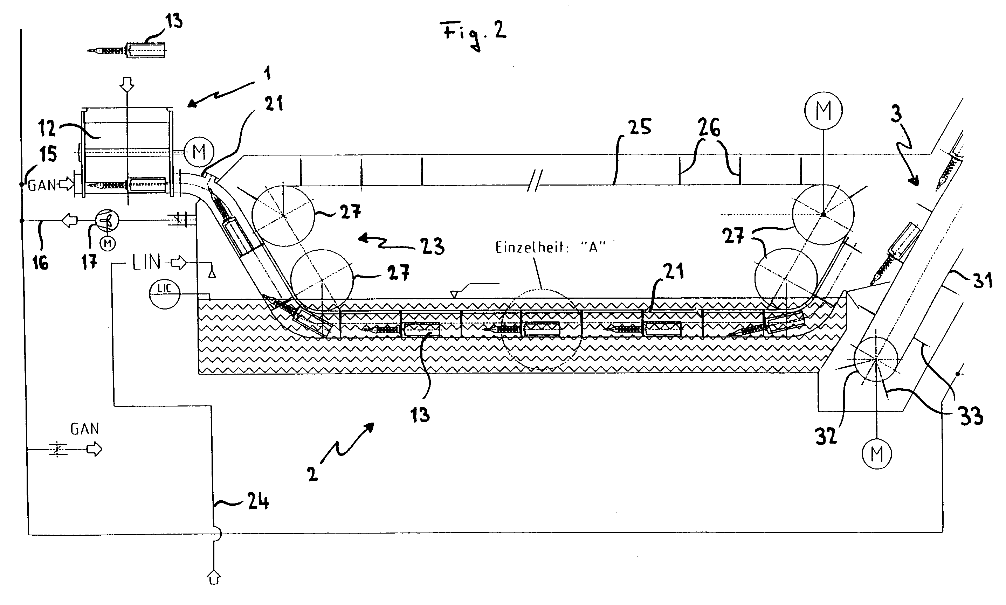

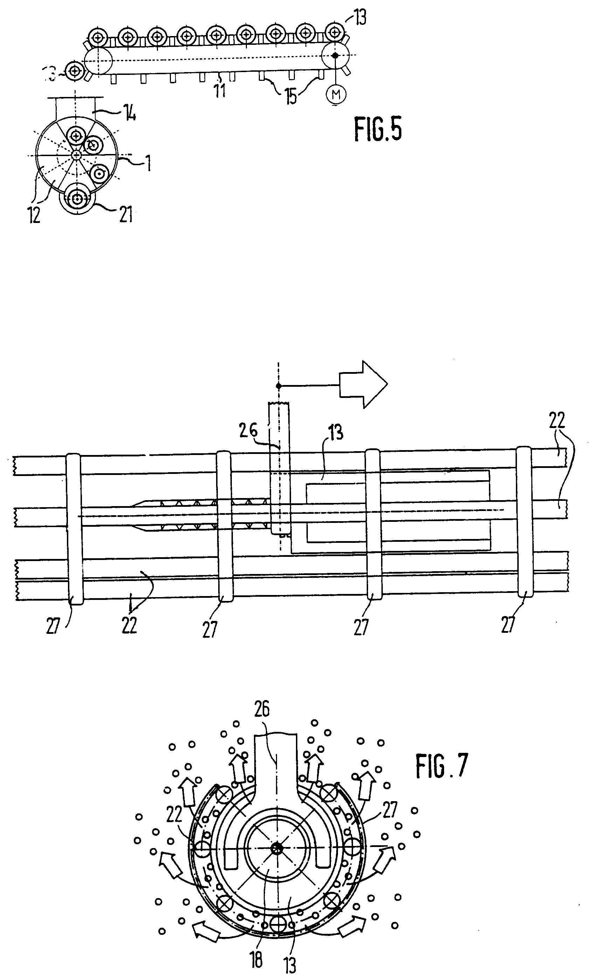

Die in der Abbildung 1 gezeigte Darstellung einer Ausführungsform der erfindungsgemäßen Aufbereitungsanlage weist eine Eingangsschleuse 1 auf, der die zu behandelnden Kartuschen 13 über ein Förder- und Sortierband 11 (Fig. 5) zugeführt werden. Die Eingangsschleuse ist vorzugsweise als Zellrad-Durchblasschleuse ausgebildet, in deren Kammern 12 die Kartuschen 13 über einen Zuführtrichter 14 von oben hineinfallen (Fig. 2). Durch die Drehung des Zellrades 1 gelangen die Kartuschen in den unteren Bereich der Schleuse und werden mit Hilfe von gasförmigem Stickstoff GAN der Leitung 15 seitlich ausgestoßen. Um dies zu ermöglichen, dreht sich das Zellrad in einem oben offenen, gasdichten Behälter, der in seinem unteren Bereich von der einen Seite mit unter Druck stehendem gasförmigem Stickstoff GAN beaufschlagt werden kann, so daß die darin befindliche Kartuschen 13 auf der gegenüberliegenden Seite in ein Führungssystem 21 ausgestoßen werden kann. Die Stickstoffversorgung über die Leitung 15 wird vorzugsweise mit gasförmigen Stickstoff aus dem Kältebad 2 sichergestellt. Es versteht sich, daß die Drehgeschwindigkeit des Zellrades 1 und die Druckstöße aus der Stickstoffleitung 15 zum Ausstoßen der Kartuschen aus dem Zellrad aufeinander abgestimmt sind. Das Zellrad weist dazu einen mit M gekennzeichneten Meßfühler auf.

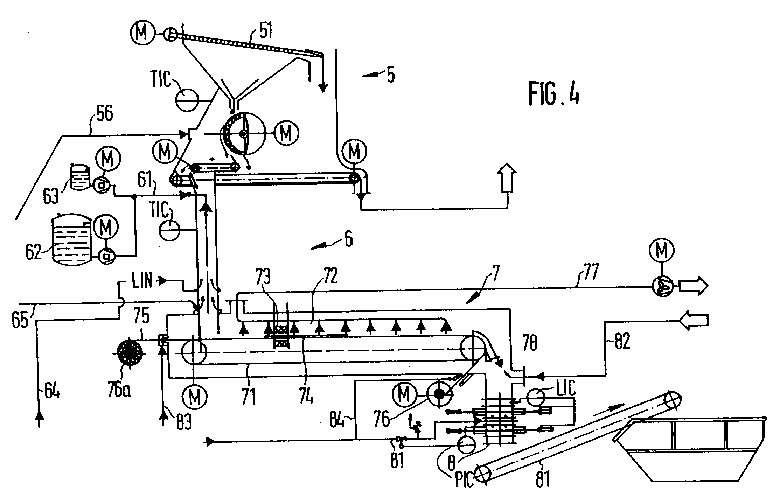

Aus dem Zellrad gelangen die Kartuschen über eine Führung 21 in das Kältbad 2, das mit flüssigem Stickstoff gefüllt ist. Die Führung 21 besteht zweckmäßiger Weise aus einer gestreckten, allseits offenen Korbkonstruktion, die den ungehinderten Zutritt von flüssigem Stickstoff und Austritt von gasförmigem Stickstoff ermöglicht. Einzelheiten der Führung 21 und der zum Transport der Kartuschen 13 vorhandenen Transporteinrichtung 23 werden weiter unten im Zusammenhang mit Fig. 4 und 5 näher beschrieben.

Auf ihrem Weg durch das Kältebad 2, das über die Leitung 24 niveauabhängig mit frischem Flüssigstickstoff LIN beschickt wird und zur Niveaukontrolle einen Meßfühler LIC aufweist, werden die Kartuschen 13 auf die Badtemperatur abgekühlt. Die Käfigstruktur der Führung 21 stellt dabei den freien Zugang des Kältemediums und den schnellen Abzug des erzeugten gasförmigen Stickstoffs sicher.

Gasförmiger Stickstoff wird aus dem Badbereich über die Leitung 16 mit Hilfe eines Ventilators 17 abgezogen. Die Länge der Führung 21 und die Transportgeschwindigkeit sind so eingestellt, daß die Kartuschen 13 auch bei vollständiger Restfüllung auf eine hinreichend tiefe Temperatur von wenigstens -80°C bis -100°C abgekühlt werden.

Der Transport der Kartuschen 13 in der Führung 21 erfolgt mit Hilfe der Transporteinrichtung 23, die zweckmäßigerweise aus einem im Kreis geführten Transportband 25 mit davon abstehenden Transportgabeln 26 besteht, die von oben in die Führung 21 eingreifen und die darin geführten Kartuschen 13 vor sich herschieben. Transportrollen 27 sorgen für eine präzise Führung der Transportgabeln 26. Die Gabeln 26 sind auf dem Transportband 25 in Abständen angeordnet, die auf die Größe der zu transportierenden Kartuschen 13 abgestimmt sind. Eine Meßstation M dient der Überwachung der Transportgeschwindigkeit und deren Abstimmung mit der Zuführgeschwindigkeit der Kartuschen 13.

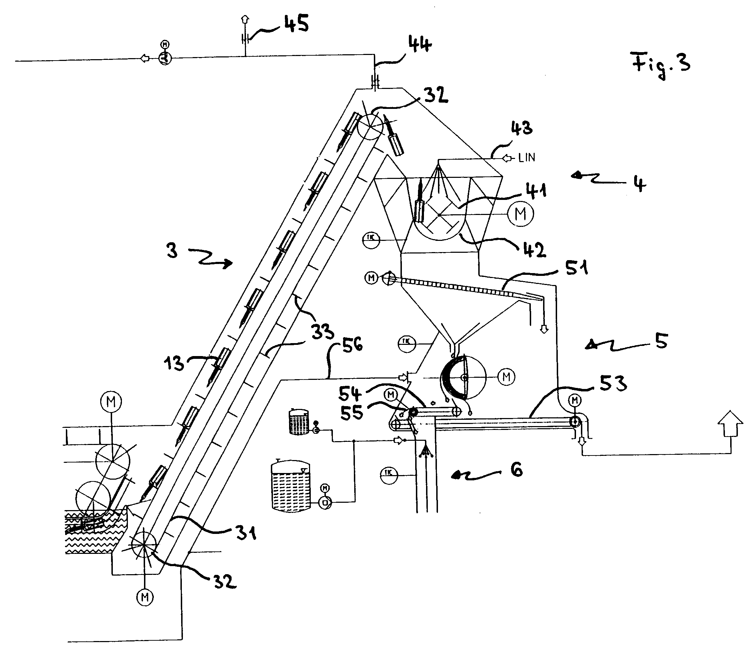

Nach Durchlaufen des Kältebades 2 gelangen die Kartuschen 13 aus der Führung 21 in die Fördereinrichtung 3 (Fig. 3) in Form eines umlaufenden Förderbandes 31, das auf die Größe der Kartuschen 13 abgestimmte Transportsegmente besitzt. Die Fördereinrichtung 3 ist vorzugsweise als Steilförderer ausgebildet, der die Kartuschen 13 in den von in regelmäßigen Abständen angeordneten Transportgabeln 33 gebildeten Segmenten aufnimmt und über Kopf in die Zerkleinerungseinrichtung 4 abgibt. Das Förderband ist über mit einer Meßstation M zur Überwachung und Steuerung der Fördergeschwindigkeit versehene Rollen 32 geführt.

Die Zerkleinerungseinrichtung 4 besteht aus einem Shredder oder vorzugsweise einer Hammermühle 41. Vorzugsweise arbeitet die Hammermühle 41 gegen ein Sieb, um eine bestimmt Korngröße des zerkleinerten Materials zu gewährleisten. Gleichzeitig bewirkt das Sieb 42 einen Walkeffekt, der sich positiv auf die Abtrennung der durch die Kälte versprödeten Inhaltsstoffe von dem Behältermaterial auswirkt. Es versteht sich, daß zur Aufrechererhaltung der erforderlichen tiefen Temperaturen von -80°C bis -100°C Kältemittel, vorzugsweise Flüssigstickstoff LIN über die Leitung 43 zugegeben werden kann, wenn die Temperaturkontrolle TK einen unzulässigen Temperaturanstieg meldet. Die Arbeitsgeschwindigkeit wird über den Meßfühler M kontrolliert und gesteuert. Gasförmiger Stickstoff wird über die Leitung 44 abgeführt und recycliert oder über ein Ventil 45 abgeblasen.

Aus der Zerkleinerung 4 gelangt das zerkleinerte Material in die Sortiereinrichtung 5. Diese besteht zunächst aus einem Rüttelsieb 51, an dem eine Trennung der Grob- von den Feinteilen vorgenommen wird. Grobteile sind hauptsächlich die zerkleinerten Materialien des Behälters, die auf dem schräggestellten Sieb 51 abgerüttelt werden und aus dem Verfahren über eine nicht dargestellte Schleuse ausgetragen werden.

Pulverförmige Inhaltsstoffe und Feinanteile des Behälters gelangen durch das Rüttelsieb 51 hindurch auf einen ersten Magnetabscheider 52, der restliche Eisen- und Aluminiumbestandteile von Kunststoffpartikeln und Inhaltsstoffen abtrennt. Dabei werden an dem ersten Magnetabscheider 52 zunächst magnetische Bestandteile abgetrennt und auf ein erstes Transportband 53 gegeben, das auch die vom Sieb 51 abgerüttelten Metall- und Kunststoffteile aufnimmt. Ein zweites Transportband 54 nimmt Kunststoffe, Inhaltsstoffe und nichtmagnetische Metallteile auf, die über einem mit dem Transportband gekoppelten zweiten Magnetabscheider 55 in metallische und nichtmetallische Anteile aufgetrennt werden. Die metallischen Anteile geraten auf das erste Transportband 53, die nichtmetallischen werden unmittelbar in den Sprühturm 6 geführt. Kalter gasförmiger Stickstoff kann über die Leitung 56 zugeführt werden, wenn die Temperaturkontrolle TIC einen unzulässigen Temperaturanstieg meldet. Meßfühler M kontrollieren die Arbeitsgeschwindigkeit aller bewegten Teile des Trennsystems 5. Sofern die Kartuschen zur Gänze aus nicht metallischen Materialien bestehen, kann natürlich auf die Magnetabscheider verzichtet werden.

Es versteht sich, daß sowohl in der Zerkleinerungsanlage wie auch in der Sortiereinrichtung eine Temperatur von höchstens -80°C bis -100°C durch entsprechende Zuleitungen für Kältemittel, vorzugsweise Stickstoff in gasförmiger oder flüssiger Form gewährleistet wird.

Die in den Sprühturm 6 (Fig. 4) gelangenden pulverförmigen Inhaltsstoffe und Kuststoffteile, die eine Temperatur von höchstens -80°C bis -100°C haben, so daß auch darin enthaltene Lösemittel in festem Zustand vorliegen, werden mit im oberen Bereich des Sprühturms 6 über die Zuleitung 61 eingesprühten Reaktionsmedium und ggf. Katalysator versetzt. Das Reaktionsmedium, vorzugsweise Ethylenglykol, befindet sich in flüssigem Zustand im Vorratstank 62, der Katalysator im Vorratstank 63. Beiden Tanks sind Dosierstationen zugeordnet.

Reaktionsmedium aus dem Behälter 62 und Katalysator aus dem Behälter 63 werden über die Leitung 61 in den Sprühturm 6 in dosiertem Verhältnis zu den reaktionsfähigen Inhaltsstoffen eingedüst, wobei im Verlauf der Zuleitung 61 eine Vorkühlstrecke vorgesehen sein kann, um die Materialien auf eine zuträgliche Temperatur (oberhalb des Schmelzpunktes) abzukühlen. Die Verfestigung des Sprühguts erfolgt aber innerhalb des Sprühturms selbst bei den dort herrschenden Temperaturen von weniger als -80°C bis -100°C. Zur Aufrechterhaltung der Temperatur im Sprühturm ist es daher zweckmäßig, zusätzlich Kühlmedium einzuführen, beispielsweise flüssigen Stickstoff LIN über die Leitung 64 oder gasförmigen Stickstoff über die Leitung 65, wenn die Temperaturkontrolle TIC einen Bedarf meldet. Dabei ist es zweckmäßig, das Kühlmedium in den unteren Bereichen des Sprühturms einzudüsen, um durch den im Sprühturm 6 aufsteigenden Kaltstickstoff eine zusätzliche Verwirbelung und Vermischung von reaktionsfähiger Verbindung, Katalysator und reaktionsfähigem Doseninhalt zu gewährleisten.

Aus dem Sprühturm 6 gelangt die Mischung aus reaktionsfähigem Kartuscheninhalt, reaktionsfähiger Verbindung und Katalysator in Pulverform in den Reaktionsraum 7. Innerhalb des Reaktionsraums 7 ist ein Reaktionsband 71 angeordnet, das das Fallgut aus dem Sprühturm 6 aufnimmt und in die eigentliche Reaktionszone 72 führt, wo die Reaktion durch Wärme induziert wird. Hierzu sind Wärmeelemente 73 oberhalb des Förderbandes 71 angeordnet, die das Reaktionsgut auf dem Förderband 71 mit Mikrowellen- oder Infrarotstrahlen auf eine für die Reaktion ausreichende Temperatur, beispielsweise etwa Raumtemperatur oder darüber, aufheizen.

Um ein Anbacken des Reaktionsgutes 74, d. h. der Mischung aus reaktionsfähigem Kartuscheninhalt, reaktionsfähiger Verbindung und Katalysator, an dem Förderband 71 zu verhindern, kann es zweckmäßig sein, das Förderband mit einer Trennfolie 75 abzudecken, die von einer Rolle 76a abgewickelt und auf eine zweite Rolle 76b aufgewickelt wird. Die Trennfolie ist ggf. mehrfach verwendbar.

Auf dem Förderband 71 reagiert das Reaktionsgut zu dem jeweils gewünschten Produkt ab. Gleichzeitig werden in der Mischung aus dem Sprühturm noch enthaltene Lösemittel und adsorptiv gebundener Stickstoff des Kältemediums freigesetzt und über die Leitung 77 abgesaugt und einer (nicht dargestellten) Abtrennung und Lösemittelgewinnung zugeführt. Bei Gegenwart oder Entstehen eines Schäummittels, wie Pentan oder CO₂, bewirkt der Austritt aus dem Reaktionsgut 74 eine teilweise Aufschäumung des Reaktionsguts, die für bestimmte Verwendungszwecke nicht unerwünscht ist.

Am Ende des Förderbandes 71 befindet sich ein Schaber 78, mit dem das ausreagierte Reaktionsgut vom Förderband bzw. der Trennfolie gelöst und über die Produktschleuse 8 aus dem Verfahren ausgeschleust und über ein Föderband 81 abgeführt wird. Stickstoffleitungen 81 und 82 regeln die Schutzgasversorgung im Schleusenbereich, wobei als Schutzgas zweckmäßigerweise Stickstoff eingesetzt wird, der aber nicht gekühlt sein muß. Weitere Stickstoffleitungen 83 und 84 im Bereich des Eintritts und Austritts der Trennfolie 75 verhindern den Sauerstoffeintritt in das System in diesem Bereich. Auch hier ist die Verwendung von Kühlstickstoff nicht erforderlich.

Es versteht sich, daß das erfindungsgemäße Verfahren in einer kälte- und wärmeisolierten Anlage durchgeführt wird. Insbesondere muß auch der Eintritt von Sauerstoff verhindert werden um das Einkondensieren von flüssigem Sauerstoff in das Kältebad 2 zu verhindern. Für die Gasführung von Vorteil ist dabei, daß das gesamte Verfahren bis in den Sprühturm 6 hinein bei Temperaturen durchgeführt wird, bei denen Löse- und Schäummittel in festem Zustand vorliegen. Dies erlaubt es, diese zentral über die Absaugleitung 77 im Reaktionsraum 7 abzuziehen und der Gewinnung zuzuführen. Das ausreagierte/ausgehärtete Polyurethanmaterial, das aus der Produktschleuse 8 aus dem Verfahren austritt, kann als Granulat beliebigen Weiterverwendungen zugeführt werden. In Frage kommt beispielsweise die Verwendung für Isoliermaterialien und in Verbundmaterialien.

In Fig. 5 sind Einzelheiten des Schleusensystems am Verfahrenseingang dargestellt, wobei die Zellraddurchblasschleuse gegenüber der Darstellung von Fig. 1 und 2 um 90° gedreht ist.

Die für das Verfahren bestimmten Kartuschen mit den Polyurenthanprepolymerrückständen 13 werden über das Förder- und Sortierband 11 den Zellen 12 der Zellraddurchblasschleuse 1 eingeführt. Ein Zuführtrichter 14, unter dem sich die Schleuse wegdreht, sorgt für die zielgenaue Einführung der Kartuschen 13.

Zweckmäßigerweise weist das Förder- und Sortierband 11 Rippen oder Gabeln 15 auf, die die auf dem Förderband transportierten Kartuschen 13 voneinander trennen. Auf diese Art und Weise kann bei vorgegebener Fördergeschwindigkeit der Takt der Kartuschenabgabe genau auf die Transportgeschwindigkeit der Zellradschleuse 1 und den Transporttakt in der Führung 21 des Kältebades 2 abgestimmt werden. Die Vorgabe eines Taktes erlaubt ferner auch die zeitgenaue Ausbringung der Kartuschen 13 aus der Schleuse 1 mit Hilfe von Druckstickstoff durch die Leitung 15 (Fig. 2).

Wie aus Fig. 5 ersichtlich, öffnet sich die Durchblaßschleuse 1 an ihrem unteren Ende (gegenüber dem Zuführtrichter 14) in die Führung 21, in die die Kartuschen hineingleiten und mit Hilfe des Druckstoßes aus der Leitung 15 in Richtung auf die Transporteinrichtung 23 ausgestoßen werden.

Fig. 6 und 7 zeigen Einzelheiten der Führung 21 und der Transporteinrichtung 23 zum Transport der Kartuschen 13 innerhalb der Führung 21.

Die Führung 21 hat insgesamt einen langezogenen, käfig- bzw. korbähnlichen Aufbau. Die Führung besteht im wesentlichen aus parallel geführten Führungsschienen 22, die genügend Zwischenraum für den Zutritt von Flüssigstickstoff und Austritt von verdampftem Stickstoff lassen. Die Führungsschienen 22 werden außen durch Fixierungsringe 27 so zusammengehalten, daß die relative Position zueinander festgelegt ist. Die Fixierungsringe umgreifen die gesamte Führung 21 mit Außnahme des oberen Endes, wo der Raum zwischen zwei führungsschienen 22 frei bleibt, so daß eine Transportgabel 26 oder dergleichen von oben eingreifen und die in der Führung 21 befindlichen Kartuschen 13 durch die Führung schieben kann. Es ergibt sich das Bild eines langgestreckten Käfigs aus parallel geführten Schienen 22 und umgreifenden Fixierungsringen 27, der im oberen Bereich über seine gesamte Länge einen Freiraum für die Bewegung der Transportgabel 26 läßt. Die Größe des Käfigs ist auf die Größe der Kartuschen abgestimmt und so ausgewählt, daß sich die Kartuschen beim Hindurchführen nicht verkanten können. In der Darstellung wird die Kartusche 13 in Pfeilrichtung mit dem Boden voran transportiert, die Gabel 26 umfaßt den Stutzen 18.

Die Transportgabeln 26 befinden sich an einem Transportband 25, das über ein entsprechend angeordnetes System aus Transportrollen 27 die Kartuschen durch die Führung 21 hindurch zum Förderband 31 befördert, wo sie aus der Führung 21 herausfallen und von den Transportelementen 32 des Förderbandes 31 aufgenommen werden. Vom Ende der Führung 21 wird das Transportband 25 über dem Bad 2 zurück in Richtung auf die Zellradschleuse 1 bewegt, wo die Gabeln 26 erneut an einem dafür vorgesehenen Ort in die Führung 21 eingreifen und die in der Führung befindlichen Kartuschen durch das Bad 2 transportieren. Es versteht sich, daß die gesamte Führung 21 im Bereich der eigentlichen Kühlstrecke im Kältebad 2 so verläuft, daß die Kartuschen allseitig von Flüssigstickstoff umspült werden.

## Patentansprüche

1. Verfahren zum Aufbereiten von Emballagen, die reaktionsfähige Rückstände enthalten, bei dem die Emballagen in eine Kältezone (2) eingebracht und soweit abgekühlt werden, daß sich darin befindliche Rückstände verfestigen, die Emballagen anschließend in gekühltem Zustand zerkleinert (4) werden, wonach die zerkleinerten Emballagen in eine die reaktionsfähigen Rückstände enthaltende Fraktion und wenigstens eine weitere Fraktion aufgetrennt (51, 52) werden, dadurch gekennzeichnet, daß die reaktionsfähige Rückstände enthaltende Fraktion in eine Mischzone (6) eingebracht wird, in die gleichzeitig ein mit den Rückständen reaktionsfähiges Agens, gegebenenfalls zusammen mit einem Katalysator eingeführt wird, wobei die Temperatur in der Mischzone unterhalb der Erweichungstemperatur der Rückstände wie des reaktionsfähigen Agens gehalten wird, und die so erhaltene Mischung aus reaktionsfähige Rückstände enthaltender Fraktion und damit reaktionsfähigem Agens und gegebenenfalls Katalysator in eine Reaktionszone (72) auf eine zur Reaktion ausreichende Temperatur gebracht und ausreagieren gelassen wird.

2. Verfahren nach Anspruch 1, dadurch gekennzeichnet, daß es bei einer Temperatur < -80 °C durchgeführt wird.

3. Verfahren nach Anspruch 2, dadurch gekennzeichnet, daß das Verfahren unter Sauerstoffausschluß durchgeführt wird.

4. Verfahren nach Anspruch 3, dadurch gekennzeichnet, daß die Emballagen durch ein Bad mit flüssigem Stickstoff geführt werden.

5. Verfahren nach einem der vorstehenden Ansprüche, dadurch gekennzeichnet, daß die Emballagen mit Hilfe einer Zellrad-Durchblasschleuse in eine Kühlstrecke eingebracht werden.

6. Verfahren nach einem der vorstehenden Ansprüche, dadurch gekennzeichnet, daß die Emballagen bei einer Temperatur < - 80°C mit einem gegen ein Sieb arbeitenden Hammerwerk zerkleinert werden.

7. Verfahren nach einem der vorstehenden Ansprüche, dadurch gekennzeichnet, daß die in den Emballagen enthaltenen reaktionsfähigen Rückstände bei der Zerkleinerung pulverisiert werden.

8. Verfahren nach einem der vorstehenden Ansprüche, dadurch gekennzeichnet, daß die Mischzone ein Sprühturm ist.

9. Verfahren nach Anspruch 8, dadurch gekennzeichnet, daß das reaktionsfähige Agens in das den Sprühturm passierende Pulver aus reaktionsfähigen Rückständen gedüst wird.

10. Verfahren nach Anspruch 8 oder 9, dadurch gekennzeichnet, daß gasförmiger oder flüssiger kalter Stickstoff zur Temperatursteuerung in den Sprühturm eingedüst wird.

11. Verfahren nach einem der vorstehenden Ansprüche, dadurch gekennzeichnet, daß die Reaktionszone mit Mikrowellen beheizt wird.

12. Verfahren nach einem der vorstehenden Ansprüche, dadurch gekennzeichnet, daß in der Reaktionszone freiwerdende Gase durch Kondensation abgeschieden werden.

13. Verfahren nach einem der vorstehenden Ansprüche, dadurch gekennzeichnet, daß die Emballagen, Kartuschen und die darin enthaltenen reaktionsfähigen Rückstände isocyanatgruppenhaltige Prepolymere für die Polyurethanschaumherstellung sind.

14. Verfahren nach Anspruch 13, dadurch gekennzeichnet, daß das reaktionsfähige Agens eine hydroxygruppenhaltige Verbindung ist.

15. Verfahren nach Anspruch 14, dadurch gekennzeichnet, daß die hydroxygruppenhaltige Verbindung Ethylenglykol oder ein Polyetheralkohol ist.

16. Verfahren nach einem der vorstehenden Ansprüche, dadurch gekennzeichnet, daß in der Misch- und/oder Reaktionszone Zusatzstoffe zugesetzt werden.

## Claims

1. A process for recycling packings containing reactive residues, in that the packings are introduces into a cold zone (2) and cooled until the residues contained therein solidify, the packings are then crushed (4) in the cooled state, the crushed packings are divided into a fraction containing the reactive residues and at least one further fraction (51, 52), characterized in that the fraction containing reactive residues is introduced into a mixing zone (6) into which an agent reactive with the residues is simultaneously introduced, optionally together with a catalyst, the temperature in the mixing zone being held below the softening temperature of the reisudes and the reactive agent, and the reuslting mixture of fraction containing reactive residues and agent reactive therewith and optionally catalyst is brought to a temperature sufficient for reaction and reacted in a reaction zone (72).

2. The process of claim 1, characterized in that it is performed at a temperature < -80°C.

3. The process of claim 2, characterized in that the process is performed in the absence of oxygen.

4. The process of claim 3, characterized in that the packings are guided through a bath with liquid nitrogen.

5. The process of any of the above claims, characterized in that the packings are introduced into a cooling stretch with the help of a cellular wheel pneumatic sluice.

6. The process of any of the above claims, characterized in that the packings are crushed at a temperature < -80°C with a hammer mill working against a sifter.

7. The process of any of the above claims, characterized in that the reactive residues contained in the packings are pulverized during crushing.

8. The process of any of the above claims, characterized in that the mixing zone is a spray tower.

9. The process of claim 8, characterized in that the reactive agent is sprayed into the powder of reactive residues passing through the spray tower.

10. The process of claim 8 or 9, characterized in that gaseous or liquid cold nitrogen is sprayed into the spray tower for temperature control.

11. The process of any of the above claims, characterized in that the reaction zone is heated with microwaves.

12. The process of any of the above claims, characterized in that gases released in the reaction zone are separated by condensation.

13. The process of any of the above claims, characterized in that the packings, cartridges and the reactive residues contained therein are prepolymers containing isocyanate groups for polyurethane foam production.

14. The process of claim 13, characterized in that the reactive agent is a hydroxy compound.

15. The process of claim 14, characterized in that the hydroxy compound is ethylene glycol or a polyether alcohol.

16. The process of any of the above claims, characterized in that additives are added in the mixing and/or reaction zones.

## Revendications

1. Procédé de traitement d'emballages qui contiennent des résidus réactifs, dans lequel les emballages sont amenés dans une zone froide (2) et refroidis jusqu'à ce que les résidus qui s'y trouvent se solidifient, les emballages étant ensuite déchiquetés à froid (4), de sorte que les emballages déchiquetés sont séparés en une fraction contenant les résidus réactifs et au moins une autre fraction (51, 52), caractérisé en ce que la fraction contenant les résidus réactifs est amenée dans une zone de mélange (6) dans laquelle on apporte simultanément un agent apte à réagir avec les résidus, éventuellement accompagné d'un catalyseur, la température dans la zone de mélange étant maintenue en dessous de la température de ramollissement des résidus ainsi que de l'agent réactif, et le mélange ainsi obtenu, constitué de la fraction contenant les résidus réactifs et de l'agent apte à réagir avec ces derniers ainsi qu'éventuellement du catalyseur, est amené dans une zone de réaction (72) à une température suffisante pour la réaction, et où on le laisse réagir.

2. Procédé selon la revendication 1, caractérisé en ce qu'il est réalisé à une température < - 80°C.

3. Procédé selon la revendication 2, caractérisé en ce que le procédé est réalisé en l'absence d'oxygène.

4. Procédé selon la revendication 3, caractérisé en ce que les emballages sont passés à travers un bain contenant de l'azote liquide.

5. Procédé selon l'une des revendications précédentes, caractérisé en ce que les emballages sont introduits dans une ligne de refroidissement au moyen d'un sas de soufflage à roue cellulaire.

6. Procédé selon l'une des revendications précédentes, caractérisé en ce que les emballages sont déchiquetés à une température < - 80° C, au moyen d'un mécanisme à marteaux travaillant contre un tamis.

7. Procédé selon l'une des revendications précédentes, caractérisé en ce que les résidus réactifs contenus dans les emballages sont pulvérisés lors du déchiquetage.

8. Procédé selon l'une des revendications précédentes, caractérisé en ce que la zone de mélange est une tour de pulvérisation.

9. Procédé selon la revendication 8, caractérisé en ce que l'agent réactif est pulvérisé dans la poudre de résidus réactifs passant dans la tour de pulvérisation.

10. Procédé selon les revendications 8 ou 9, caractérisé en ce que de l'azote froid, gazeux ou liquide, est projeté dans la tour de pulvérisation en vue du réglage de la température.

11. Procédé selon l'une des revendications précédentes, caractérisé en ce que la zone de réaction est chauffée par micro - ondes.

12. Procédé selon l'une des revendications précédentes, caractérisé en ce que des gaz libérés dans la zone de réaction sont séparés par condensation.

13. Procédé selon l'une des revendications précédentes, caractérisé en ce que les emballages sont des cartouches et les résidus réactifs qui y sont contenus sont des prépolymères contenant des groupes isocyanate pour la fabrication de mousse de polyuréthanne.

14. Procédé selon la revendication 13, caractérisé en ce que l'agent réactif est un composé contenant des groupes hydroxyle.

15. Procédé selon la revendication 14, caractérisé en ce que le composé contenant des groupes hydroxyle est l'éthyléneglycol ou un polyétheralcool.

16. Procédé selon l'une des revendications précédentes, caractérisé en ce que l'on ajoute des additifs dans la zone de mélange et/ou dans la zone de réaction.
